# EUROPEAN PATENT APPLICATION

(11) **EP 1 583 331 A1**
(43) Date of publication of application: **05.10.2005**
(21) Application number: 05102467.7
(22) Date of filing: 29.03.2005
(51) Int. Cl.: H04M 1/02

(54) **Scenario synchronism between a primary display and a secondary display of an electronic device**

(30) Priority: 29.03.2004 US 811749
(71) Applicant: MICROSOFT CORPORATION, Redmond, Washington 98052-6399 (US)
(72) Inventor: Stroupe, Autumn L., Redmond, Washington 98052 (US); O'Neil, Daniel G., Redmond, Washington 98052 (US); Todd, Marc W., Redmond, Washington 98052 (US)
(74) Representative: Grünecker, Kinkeldey, Stockmair & Schwanhäusser Anwaltssozietät

(57) **Abstract**

A method and system for scenario synchronizing in a communication device allows a user to complete a task initiated or prompted from a secondary display on a primary display. The secondary display provides quick access to useful information such as time, date, battery life, signal strength, new messages and calendar reminders. When the communication device (e.g., a clamshell flip-style device) is opened to access the primary display, a user need not navigate to the specific application to complete the initiated task.

## Description

### Background of the Invention

Mobile communication devices typically include both primary and secondary displays to communicate information to a user. For example, clamshell flip-style mobile devices often include a secondary display on the outside of the device and a larger primary display that may be viewed when the device is opened. The user may immediately glean information from the secondary display to determine the state of the device without opening the device. For example, an incoming number is displayed on the secondary display such that the user may choose to open the device to answer the telephone call. Due to the multitude of potential hardware/software interactions and user scenarios involving the secondary display, the need for efficient and intuitive interaction is critical to an enhanced user experience.

### Summary of the Invention

The present invention is directed to a method and system for scenario synchronizing in a mobile communication device that allows a user to complete a task initiated or prompted from a secondary display on a primary display. The secondary display provides quick access to useful information such as time, date, battery life, signal strength, new messages and calendar reminders. When the communication device (e.g., a clamshell flip-style device) is opened to access the primary display, a user need not navigate to the specific application to complete the initiated task. For example, a calendar reminder that has not been acted upon from the secondary display is shown on the primary display when the communication device is opened.

In one aspect of the invention, an event is received at a communication device having a secondary display and a primary display. Information associated with the event is displayed on the secondary display. An application that supports the event is activated on the primary display. Information associated with the event is displayed on the primary display. Functionality and information that is associated with the application in addition to the information displayed on the secondary display is accessible on the primary display when the primary display is accessed.

In another aspect of the invention, the system for scenario synchronizing in a communication device includes a secondary display, a primary display coupled to the secondary display, and an application. The application is activated upon the occurrence of an event at the communication device. Information associated with the event is displayed on the secondary display. Functionality and information associated with the application in addition to the information displayed on the secondary display is accessible on the primary display when the primary display is accessed.

### Brief Description of the Drawings

FIGURE 1 is a functional block diagram illustrating an embodiment of an example communication device for practicing the present invention.
FIGURE 2 illustrates an example functional block diagram of a system for scenario synchronizing between a secondary display and a primary display of a communication device, in accordance with the present invention.
FIGURE 3 illustrates an example secondary display and an example primary display of a communication device for scenario synchronizing a calendar reminder application, in accordance with the present invention.
FIGURE 4 illustrates example secondary and primary displays of a communication device for scenario synchronizing a music application, in accordance with the present invention.
FIGURE 5 illustrates example secondary and primary displays of a communication device for scenario synchronizing a camera application, in accordance with the present invention.
FIGURE 6 is an operational flow diagram illustrating a process for scenario synchronizing between a primary display and a secondary display of a communication device, in accordance with the present invention.

### Detailed Description of the Preferred Embodiment

Briefly stated, a method and system for scenario synchronizing in a communication device allows a user to complete a task initiated or prompted from a secondary display on a primary display. The secondary display provides quick access to useful information such as time, date, battery life, signal strength, new messages and calendar reminders. When the communication device (e.g., a clamshell flip-style device) is opened to access the primary display, a user need not navigate to the specific application to complete the initiated task. For example, a calendar reminder that has not been acted upon from the secondary display is shown on the primary display when the communication device is opened.

### Illustrative Operating Environment

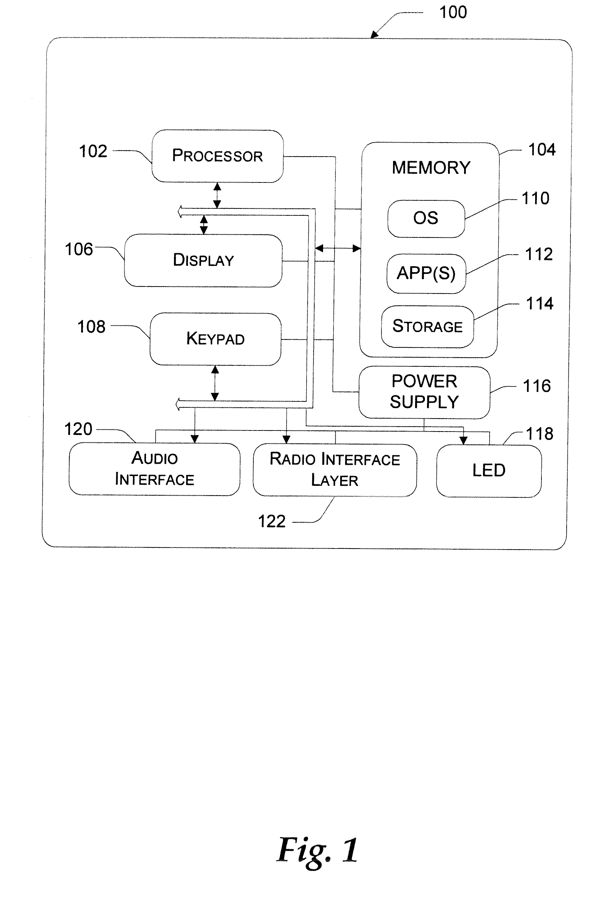

FIGURE 1 is a functional block diagram illustrating an embodiment of an example communication device for practicing the present invention. In one embodiment of the present invention, communication device 100 is implemented as a mobile communication device, such as a personal digital assistant (PDA), smart phone, and the like. Communication device 100 may also include handheld computers, tablet computers, personal computers, multiprocessor systems, microprocessor-based or programmable consumer electronics, network PCs, wearable computers, and the like.

Communication device 100 may include many more components than those shown in FIGURE 1. The components shown, however, are sufficient to disclose an illustrative embodiment for practicing the invention.

As shown in the figure, communication device 100 includes processor 102, memory 104, display 106, and keypad 108. Memory 104 generally includes both volatile memory (e.g., RAM) and non-volatile memory (e.g., ROM, Flash Memory, or the like). Communication device 100 includes operating system 110, such as the Windows CE operating system from Microsoft Corporation or other such operating system, which is resident in memory 104 and executes on processor 102. Keypad 108 may be a push button numeric dialing pad (such as on a typical telephone), or a multi-key keyboard (such as a conventional keyboard). Display 106 may be a liquid crystal display, or any other type of display commonly used in mobile communication devices. For example, display 106 may be touch-sensitive, and would then also act as an input device enabling entry of FE language strokes. In one embodiment, communication device 100 includes a primary display and a secondary display.

One or more application programs 112 are loaded into memory 104 and run on operating system 110. Examples of application programs include phone dialer programs, content manager, email programs, scheduling programs, word processing programs, spreadsheet programs, smart filter, and so forth. Communication device 100 also includes non-volatile storage 114 within memory 104. Non-volatile storage 114 may be used to store persistent information which should not be lost if communication device 100 is powered down. Application programs 112 may use and store information in storage 114, such as e-mail or other messages used by an e-mail application, contact information, databases, and the like, used by the content manager, appointment information used by a scheduling program, documents used by a word processing application, and the like. A synchronization application may also reside on communication device 100 and is programmed to interact with a corresponding synchronization application resident on a host computer to keep the information stored in storage 114 synchronized with corresponding information stored at the host computer.

Communication device 100 also includes power supply 116, which may be implemented as one or more batteries. Power supply 116 might further include an external power source, such as an AC adapter or a powered docking cradle that supplements or recharges the batteries.

Communication device 100 is also shown with two types of external notification mechanisms: LED 118 and audio interface 120. These devices may be directly coupled to power supply 116 so that when activated, they remain on for a duration dictated by the notification mechanism even though processor 102 and other components might shut down to conserve battery power. LED 118 may be programmed to remain on indefinitely until the user takes action to indicate the powered-on status of the device. Audio interface 120 is used to provide audible signals to and receive audible signals from the user. For example, audio interface 120 may be coupled to a speaker for providing audible output and to a microphone for receiving audible input, such as to facilitate a telephone conversation.

Communication device 100 may also include radio interface layer 122 that performs the function of transmitting and receiving radio frequency communications. Radio interface layer 122 facilitates wireless connectivity between communication device 100 and the outside world, via a communications carrier or service provider. Transmissions to and from radio interface layer 122 are conducted under control of operating system 110. In other words, communications received by radio interface layer 122 may be disseminated to application programs 112 via operating system 110, and vice versa.

Radio interface layer 122 allows communication device 100 to communicate with other computing devices, such as over a network. Radio interface layer 122 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Scenario Synchronism between a Primary and Secondary Display

Scenario synchronism is a feature that allows a communication device user to easily complete a given task initiated from a secondary display on a primary display. An event occurs at the communication device and information related to the event is shown on the secondary display. The event may be associated with a telephone application (e.g., an incoming call or message, caller identification), an information application (e.g., a calendar reminder), or a user-initiated application (e.g., a camera or music application). The user may initiate a task associated with the event from the secondary display. When opened, the device automatically navigates to the appropriate location within a user interface (UI) such that the user may complete the initiated task. The user is also provided with access to more information and functionality associated with the task.

For example, if the communication device is opened while a notification is still active on the secondary display, the notification is then shown with more information on the primary display. The primary display provides the user with an opportunity to respond to the notification or dismiss the alert. If the user dismisses the alert before opening the device, the primary display is updated accordingly.

Scenario synchronism allows for easy and intuitive UI navigation on communication devices with secondary displays. With devices including more complex and rich features, smart navigation is critical to improving and maintaining an enhanced user experience. Scenario synchronism gives users seamless access to appropriate information and functionality. Scenario synchronism becomes even more important when additional features such as imaging and music are included on the communication device; especially since tasks like locating a play list or adjusting a camera setting are becoming as common as responding to a notification.

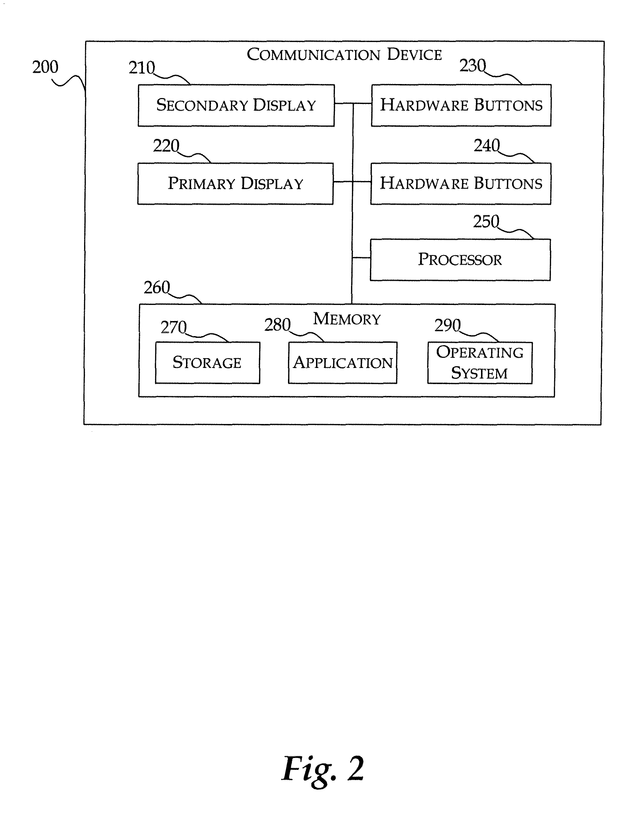

FIGURE 2 illustrates an example functional block diagram of a system for scenario synchronizing between a secondary display and a primary display of a communication device. Communication device 200 includes secondary display 210, primary display 220, hardware buttons 230 associated with secondary display 210, hardware buttons 240 associated with primary display 220, processor 250 and memory 260. Secondary display 210 is coupled to primary display 220. Hardware buttons 230 are coupled to secondary display 210. Hardware buttons 240 are coupled to primary display 220. Processor 250 and memory 260 are coupled to primary display 220 and secondary display 210. Memory 260 includes storage 270, an application 280 and an operating system 290 that executes on processor 250 and runs application 280.

When an event occurs at communication device 200, application 280 corresponding to the event is activated. The event may include any task initiated from the secondary display such as a notification (e.g., an incoming call), an alert (e.g., a calendar reminder), or a user-activated application (e.g., a media application). An event identifier associated with the event appears on secondary display 210 to communicate to a user that the event has occurred. The user may manipulate hardware buttons 230 to interact with application 280 at secondary display 210. Alternatively, the user may open communication device 200 to access primary display 220.

When the user opens communication device 200 (e.g., a clamshell flip-style device), application 280 is activated on primary display 220. Scenario synchronism provides the user with an opportunity to access functionality and information on primary display 220 that is not accessible from secondary display 210. Thus, the user need not navigate through the UI to locate the necessary information and functionality. The user may manipulate hardware buttons 240 to interact with application 280 on primary display 220.

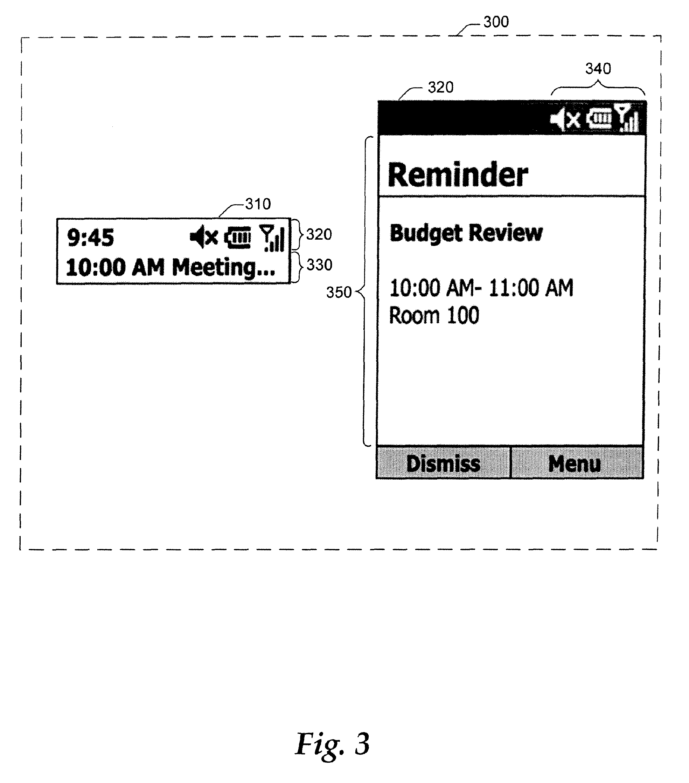

FIGURE 3 illustrates an example secondary display and an example primary display of a communication device, such as communication device 300, for scenario synchronizing a calendar reminder application. Secondary display 310 includes notification tray 320 and status text 330. Notification tray 320 is a space that users may reference quickly for important information. Notification tray 320 resides at the upper portion of secondary display 310 and provides a predictable place for notification icons, such as battery life and signal strength icons.

Status text 330 may communicate information to the user such as the next appointment listed in the user's calendar. Status text 330 may also present additional information associated with the notification icons by using text and updates to support the current notification, such as "Battery Low."

Primary display 340 is larger than secondary display 310. Primary display 340 includes notification tray 350 and status text 360. In one embodiment, notification tray 350 follows the model of notification tray 320 shown on secondary display 310. Status text 350 includes information in addition to the information communicated in status text 330 of secondary display 310.

When communication device 300 receives a notification, information about the notification is shown on secondary display 310. For example, as shown in the figure, at 9:45 AM an appointment notification about an approaching 10:00 AM meeting appears on secondary display 310. The scenario is synchronized to primary display 320 because the user has not dismissed the notification from secondary display 310. Status text 350 of primary display 320 shows more information associated with the notification (i.e., the purpose and location of the meeting). The user is also provided with access to more functionality (i.e. a menu soft key).

Scenario synchronizing can also be used with other types of notifications such as new message notifications (e.g., short message service, multimedia message service, e-mail), incoming calls, new voicemail, and modified settings associated with media applications (e.g., a camera, a music play list, and the like).

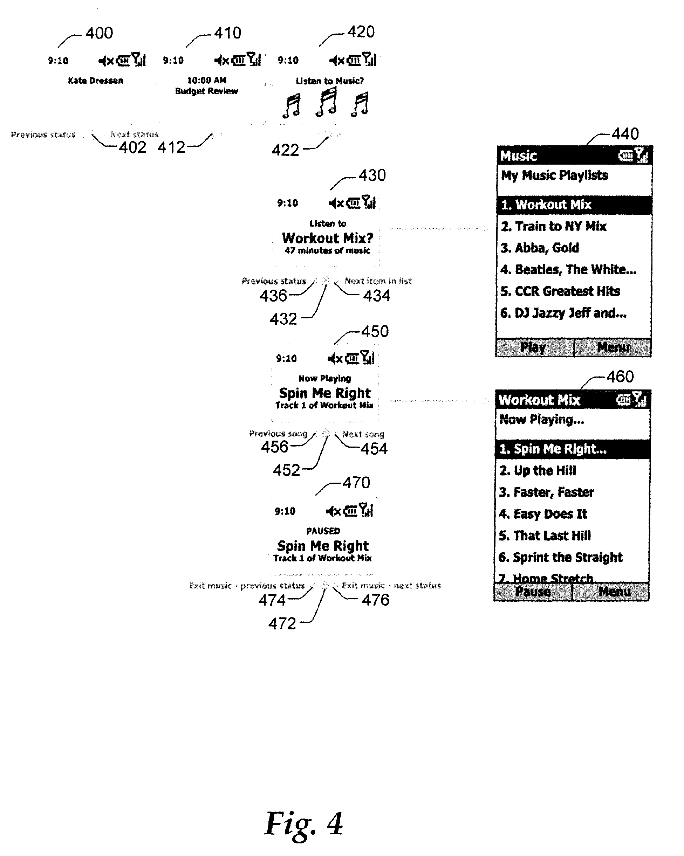

FIGURE 4 illustrates example secondary and primary displays of a communication device for scenario synchronizing media content such as a music application. Secondary display screen shot 400 shows secondary display when the communication device is at a default state. In one embodiment, the communication device owner's name is shown in the status text area, and notification icons communicating battery life, signal strength, ring tone volume, and time are shown in the notification tray.

Hardware buttons adjacent to the secondary display allow the user to interact with the content on the secondary display. For example, depressing hardware button 402 changes the status text on the secondary display to show the next appointment, as shown in secondary display screen shot 410. The user may depress hardware button 412 to open a music application from the secondary display, as shown in secondary display screen shot 420.

Depressing hardware button 422 opens the music application such that the first item in a music list is shown on the secondary display, as shown in secondary display screen shot 430. In the example shown, the first item in the music list is "Workout Mix." The user may depress hardware button 432 to play "Workout Mix." The user may also depress hardware button 434 to see the next item in the music list on the secondary display. Depressing hardware button 436 returns the secondary display to secondary display screen shot 420.

User may open the communication device to view the primary display. Primary display screen shot 440 shows the different play lists available in the user's music list. The transition from secondary display screen shot 430 to primary display screen shot 440 is an example of scenario synchronization. The user may select the desired music play list from the primary display.

Secondary display screen shot 450 shows the song that is currently playing and the corresponding play list with which the song is associated. The user may pause the song by depressing hardware button 452. The user may also advance to the next song by depressing hardware button 454, or return to the previous song by depressing hardware button 456.

The user may select a specific song without using hardware buttons 452, 454, 456 by opening the communication device to view the primary display. Primary display screen shot 460 shows the different songs that are available on the "Workout Mix" play list. In this example, scenario synchronization allows the user to select a song from "Workout Mix" because it is the play list that is currently playing on the communication device. As shown in the figure, the user selects the first track on the play list (e.g., "Spin Me Right... ").

Secondary display screen shot 470 indicates that the first track of the "Workout Mix" play list has been selected. In this example, the user has paused the track by depressing hardware button 472. Music continues playing when hardware button 472 is depressed. The user may exit the music mode of the communication device and return to the previous communication device status, such as next appointment, by depressing hardware button 474. The user may also exit the music mode of the communication device and proceed to the next communication device status by depressing hardware button 476.

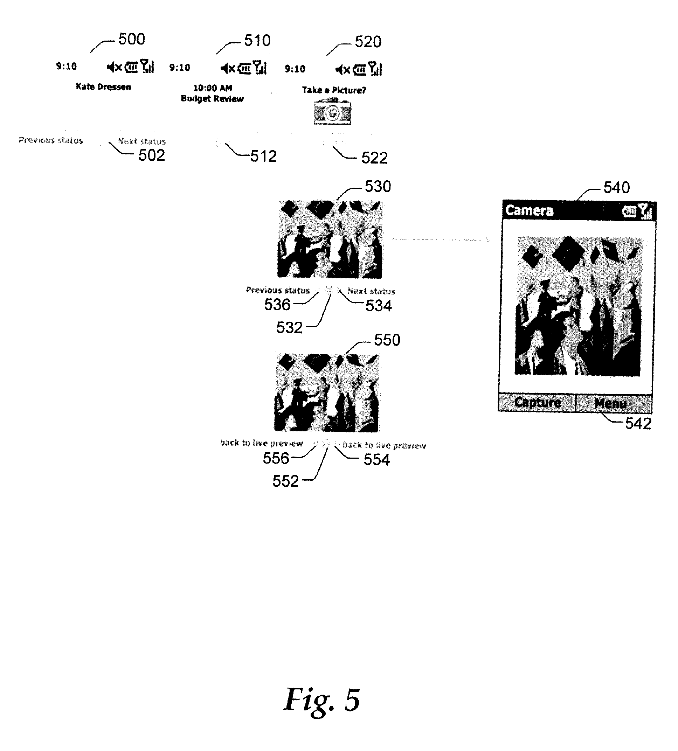

FIGURE 5 illustrates example secondary and primary displays of a communication device for scenario synchronizing media content such as a camera application. Secondary display screen shot 500 shows secondary display when the communication device is at a default state. Depressing hardware button 502 changes the status text on the secondary display to show the next appointment, as shown in secondary display screen shot 510.

The user may depress hardware button 512 to navigate to a camera application from the secondary display. The user is then prompted to activate the camera application, as shown in secondary display screen shot 520. The camera function of the communication device is activated by depressing hardware button 522. The secondary display may be used as a view finder or live preview as shown in secondary display screen shot 530. The user may capture the image shown on the secondary display without opening the communication device by depressing hardware button 532. The user may also depress hardware buttons 534 and/or 536 to exit the camera application and access other communication device functions, such as next appointment.

Scenario synchronism allows the user to access additional camera settings not available from the secondary display by opening the communication device to primary display screen shot 540. For example, the user may select menu soft key 542 to adjust a camera view finder setting such as a zoom function.

After taking the picture from the secondary display, the captured image is shown on secondary display screen shot 550. The user may dismiss the captured image and return to live preview by depressing hardware button 552. In one embodiment, depressing hardware buttons 554 and/or 556 returns the secondary display to live preview without dismissing the captured image. In another embodiment, depressing hardware buttons 554 and/or 556 allows the user to view recently captured images on the secondary display.

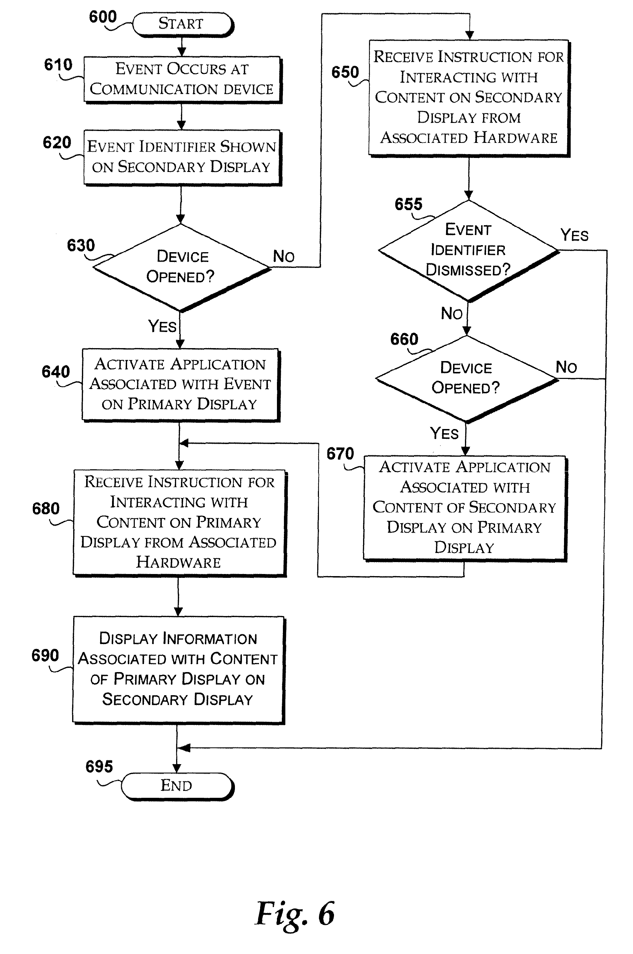

FIGURE 6 is an operational flow diagram illustrating a process for scenario synchronizing between a primary display and a secondary display of a communication device. The process begins at step 600 where a communication device is powered and active at a default state. Processing then moves to block 610.

At block 610, an event occurs at the communication device. The event may be any task initiated at the secondary display such as a notification (e.g., an incoming call), an alert (e.g., a calendar reminder), or a user-activated application (e.g., a media application). Processing continues at block 620.

At block 620, an event identifier is shown on the secondary display of the communication device. The event identifier communicates to the user the occurrence of the event. For example, an event identifier associated with a calendar reminder may display the time and significance of an approaching appointment on the secondary display. Processing proceeds to decision block 630.

At decision block 630, a determination is made whether the user has opened the communication device. If the user has opened the communication device, processing flows to block 640. If the user has not opened the device, processing advances to block 650.

At block 640, the application associated with the event is shown on the primary display. For example, if the communication device is opened while a media application is active on the secondary display, the media application is shown on the primary display. Scenario synchronization provides the user with an opportunity to access functionality and information on the primary display that is not accessible from the secondary display. Thus, the user need not navigate through the UI to locate the necessary information and functionality. Processing flows to block 680.

At block 650, the user interacts with content shown on the secondary display using hardware associated with the secondary display. In one embodiment, the hardware includes buttons on the communication device. The user manipulates the buttons to activate and interact with an application on the secondary display. Processing moves to decision block 655.

At decision block 655, a determination is made whether the user has dismissed the event identifier from the secondary display. If the user has dismissed the event identifier, the process terminates at end block 695. If the user has not dismissed the event identifier, the process advances to decision block 660.

At decision block 660, a determination is made whether the user has opened the communication device. If the user has not opened the device, processing terminates at end block 695. If the user has opened the communication device, processing flows to block 670.

At block 670, the application associated with the content shown on the secondary display is activated on the primary display. For example, if the secondary display includes content associated with a calendar reminder, a calendar application is activated on the primary display when the communication device is opened. The calendar application, as it appears on the primary screen, provides additional information and functionality about the calendar reminder that is not shown on the secondary display. Processing proceeds to block 680.

At block 680, the user interacts with content shown on the primary display using hardware associated with the primary display. In one embodiment, the hardware includes buttons associated with soft keys of the communication device. The user manipulates the buttons to interact with the application activated on the primary display. Processing moves to decision block 690.

At block 690, information associated with the content shown on the primary display is shown on the secondary display. For example, if the content shown on the primary display is a music play list, the associated information shown on the secondary display may include the song currently playing and the title of the play list. Processing terminates at end block 695.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A method for scenario synchronizing between a primary display and a secondary display of a communication device, comprising:
receiving an event at the communication device;
displaying information associated with the event on the secondary display;
activating on the primary display an application that supports the event; and
displaying on the primary display information associated with the event such that functionality and information that is associated with the application in addition to the information displayed on the secondary display is accessible on the primary display when the primary display is accessed.

2. The method of Claim 1, wherein the communication device is a clamshell flip-style device.

3. The method of Claim 2, further comprising opening the communication device such that the primary display is accessible.

4. The method of Claim 1, wherein the event includes at least one of a task, a notification, an alert, and a user-activated application.

5. The method of Claim 1, further comprising dismissing the information associated with the event from the secondary display.

6. The method of Claim 1, further comprising interacting with the information associated with the event on the secondary display.

7. The method of Claim 1, further comprising interacting with the information associated with the event on the primary display.

8. A system for scenario synchronizing in a communication device, comprising:
a secondary display;
a primary display coupled to the secondary display; and
an application that activates upon the occurrence of an event at the communication device, wherein information associated with the event is displayed on the secondary display, and wherein functionality and information associated with the application in addition to the information displayed on the secondary display is accessible on the primary display when the primary display is accessed.

9. The system of Claim 8, wherein the primary display is larger than the secondary display.

10. The system of Claim 8, wherein the secondary display is located on an outer surface of the communication device.

11. The system of Claim 8, wherein the communication device is a clamshell flip-style device.

12. The system of Claim 11, wherein the primary display is accessible when the communication device is opened.

13. The system of Claim 8, wherein the event includes at least one of a task, a notification, an alert, and a user-activated application.

14. The system of Claim 8, further comprising a first set of hardware coupled to the secondary display for manipulating content shown on the secondary display.

15. The system of Claim 8, further comprising a second set of hardware coupled to the primary display for manipulating content shown on the primary display.

16. A computer-readable medium on which is stored a computer program for scenario synchronizing between a primary display and a secondary display of a communication device, the computer program comprising instructions, which when executed by a computer, perform:
receiving an event at the communication device;
displaying information associated with the event on the secondary display;
activating on the primary display an application that supports the event; and
displaying on the primary display information associated with the event such that functionality and information that is associated with the application in addition to the information displayed on the secondary display is accessible on the primary display when the primary display is accessed.

17. The computer-readable medium of Claim 16, further comprising dismissing the information associated with the event on the secondary display.

18. The computer-readable medium of Claim 16, wherein the event includes at least one of a task, a notification, an alert, and a user-activated application.

19. The computer-readable medium of Claim 16, wherein the communication device is a clamshell flip-style device.

20. A system for scenario synchronizing between a primary display and a secondary display of a communication device, comprising:
means for receiving an event at the communication device;
means for displaying information associated with the event on the secondary display;
means for activating on the primary display an application that supports the event; and
means for displaying on the primary display information associated with the event such that functionality and information that is associated with the application in addition to the information displayed on the secondary display is accessible on the primary display when the primary display is accessed.
